(19) **Europäisches Patentamt European Patent Office Office européen des brevets**

(11) **EP 4 715 713 A1**

(12) **EUROPEAN PATENT APPLICATION**

(43) Date of publication:
25.03.2026 Bulletin 2026/13

(21) Application number: 24201494.2

(22) Date of filing: 19.09.2024

(51) International Patent Classification (IPC):
$G06Q\ 20/32^{(2012.01)}$ $G06Q\ 20/38^{(2012.01)}$

(52) Cooperative Patent Classification (CPC):
G06Q 20/3821; G06Q 20/326; G06Q 20/385

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Mastercard International Incorporated
Purchase, NY 10577 (US)

(72) Inventors:
• RADU, Cristian
1320 Beauvechain (BE)
• JOHNSON, Alan
Maldon, CM9 8HW (GB)
• GALLO, Francesco
8045 Styria (AT)

(74) Representative: Keltie LLP
No. 1 London Bridge
London SE1 9BA (GB)

(54) **CREDENTIAL PROCESSING IN A DISTRIBUTED SYSTEM**

(57) A method of processing credentials in a distributed system comprising a plurality of credential processing nodes is described. Each of the plurality of credential processing nodes is adapted to perform credential processing in response to credential processing requests. Individual nodes may use at least a first credential processing type or a second credential processing type. The method has the following elements. It is established that a credential processing request is to be directed to a new credential processing node for the associated credential. It is determined whether stakeholders for the credential support the second credential processing type. It is also determined whether the new credential processing node supports the second credential processing type. If both the stakeholders for the credential and the new credential processing node support the second credential processing type, the new credential processing node processes the credential using the second credential processing type. Otherwise, the new credential processing node processes the credential using the first credential processing type. A corresponding distributed processing system adapted for the processing of credentials is also described.

Figure 2

**Description**

Field of Disclosure

The present disclosure relates to credential processing in a distributed system. In particular embodiments, the disclosure relates to processing of credentials across a complex distributed system where different nodes of the system use different credential processing methods.

Background to Disclosure

Data management across distributed systems is complex, particularly when the same data needs to be held at different points in the distributed system to achieve required results, such as local speed of performance. Ensuring consistency across the distributed system is necessary to ensure that changes in data at one point are reflected, or otherwise addressed, wherever that data is held.

This may apply where a credential needs to be used across a complex distributed system - for example, a system where the credential is required by a user to access or use a globally accessible system. "Credential" is here considered in a broad sense, as digital data that represents, or contributes to the representation of, a user - a credential may then be used, for example, to determine whether the user can access a digital service. Credentials are typically processed - for example, generated and validated - using cryptographic processes. Use of a credential in this way may become particularly challenging where the rules for access or use of the credential differ for different regions of the distributed system - for example, if there are requirements as to the use made of the credential in a particular geography. This may, for example, require that any interaction with that credential take place within that particular geography, thus also requiring a copy of that credential in that geography.

The need to use a credential to access services globally in this way means that this issue is potentially relevant to any service requiring global access but subject to local legal requirements. This issue is particularly relevant for banking and financial services. Digital transactions, such as online and mobile payment transactions, are increasingly common. To address security concerns, tokenisation has been adopted as a mechanism. Tokenization is a technique regularly used in data security for protection of sensitive data elements - it involves the replacement of the sensitive data element with a non-sensitive equivalent, typically with a similar form or format so that it can interact with systems or processes in the same way as the sensitive data element. The token is a reference or identifier that maps back to the sensitive data element through a detokenization process. The mapping from sensitive data element to token uses methods that make a reverse mapping impractical without access to the detokenization process. Detokenization will typically involve the use of a token vault in which tokens are stored against their corresponding sensitive data elements in a secure manner.

For payment devices using card-like transaction processes, tokenisation involves the replacement of the card number by another number. The card number here is the Primary Account Number (PAN), which as is described further below provides various pieces of information. Here, the card is tokenised in the sense that a token is granted corresponding to the card's PAN. This token is used in place of the PAN in digital transactions. This provides additional security for the payment card and enables digital transactions to be performed efficiently. Such a token is a particular example of a credential, as discussed above.

Digital cards are now very numerous, and payment networks extend across the whole planet - consequently it is important to move to a properly decentralized system for effective payment processing. However, the most effective approaches for managing credentials such as tokens in a centralized system may not be the most effective approaches in a fully decentralized system, as resources such as token vaults can either be bottlenecks if they remain a unique resource or the source of additional process demands if they are distributed or replicated. Moreover, any modification of credential management processes may be difficult to implement in a single transformation process, because of the large numbers of stakeholders in such processes, and the need for relevant systems to remain in full operation. It would be desirable to find a way to address such issues.

Summary of Disclosure

In a first aspect, the disclosure provides a method of processing credentials in a distributed system comprising a plurality of credential processing nodes, wherein each of the plurality of credential processing nodes is adapted to perform credential processing in response to credential processing requests according to at least a first credential processing type or at least a second credential processing type, the method comprising: establishing that a credential processing request is to be directed to a new credential processing node for the associated credential; determining whether stakeholders for the credential support the second credential processing type; determining whether the new credential processing node supports the second credential processing type; and if both the stakeholders for the credential and the new credential processing node support the second credential processing type, the new credential processing node processes the credential using the second credential processing type, otherwise the new credential processing node processes the credential using the first credential processing type.

Using this approach, it is possible to transition a complex distributed system for credential processing from one where nodes use a first credential processing type to one where they use a second credential processing type in a staged manner. While it may be desirable for a second credential processing type to be used, it may be impractical or undesirable to change the entire system at once. The approach described allows a fully effective way of working during any such transition, allowing nodes to be transitioned at the appropriate time.

In embodiments, the first credential processing type may comprise associating the credential with a value by reference to a stored table, and the second credential processing type may comprise generating the value from the credential by a predetermined process. The generation of the value from the credential may use a cryptographic process, and may be based on parameters associated with the owner of the credential. In such cases, if an original processing node uses the first credential processing type for the credential and the new processing node uses the second credential processing type for the credential, a new credential may be generated. Also in such cases, if the new credential processing node uses the first credential processing type for the credential, the credential may be migrated to the new credential processing node.

In embodiments, the method of processing credentials comprises tokenisation and/or detokenization of a sensitive value. The first credential processing type may then comprise storage of the token and the associated sensitive value in a token vault for the credential processing node. The distributed system may be a transaction processing system, and the sensitive value may be an account number for a cardholder. Here, the stakeholders may comprise an issuing bank for the cardholder. The token may be for digital transactions, and the stakeholders may comprise a wallet provider for the cardholder.

In a second aspect, the disclosure provides a distributed processing system adapted for the processing of credentials, wherein the distributed processing system comprises: a plurality of credential processing nodes adapted to perform credential processing in response to credential processing requests according to at least a first credential processing type or at least a second credential processing type; and means to route a credential processing request to a credential processing node for the associated credential; wherein if the means to route the credential processing request determines that the credential processing request should be routed to the a new credential processing node, the distributed system is adapted to: determine whether stakeholders for the credential support the second credential processing type; determine whether the new credential processing node supports the second credential processing type; and if both the stakeholders for the credential and the new credential processing node support the second credential processing type, provide that the new credential processing node processes the credential using the second credential processing type, otherwise provide that the new credential processing node processes the credential using the first credential processing type.

The first credential processing type may comprise associating the credential with a value by reference to a stored table, and the second credential processing type may comprise generating the value from the credential by a predetermined process using a cryptographic process. In embodiments, the distributed system may be a transaction processing system, and processing credentials may comprise tokenisation and/or detokenization of an account number for a cardholder, wherein the credential is the token and the stakeholders comprise an issuing bank for the cardholder. Such a token may be for digital transactions, and the stakeholders may then comprise a wallet provider for the cardholder.

Brief Description of the Drawings

Figure 1 shows schematically a system for credential processing suitable for implementing embodiments of the disclosure;

Figure 2 is a flow diagram illustrating a method of credential processing according to an embodiment of the disclosure as applied to a system such as that shown in Figure 1;

Figure 3 shows schematically a distributed transaction architecture using a four-party model;

Figure 4 illustrates elements of a complex distributed system adapted to implement the transaction architecture of Figure 3;

Figure 5 shows schematically an exemplary system for enabling digital transactions in the transaction architecture of Figures 3 and 4;

Figure 6 shows the transaction path of a digital contactless transaction according to a conventional tokenization arrangement;

Figure 7 shows the structure of a conventional token;

Figure 8 illustrates an approach to providing an additional parametric input and a random input for cryptographic mechanisms used in a generative approach to tokenisation;

Figure 9 shows how a security score may be derived from wallet technology features to provide a parameter for use in encryption in a generative approach to tokenisation;

Figure 10 is a flow diagram illustrating a method of token processing in a distributed processing architecture according to an embodiment of the disclosure, here in an environment suitable for implementing a distributed form of the functionality shown in Figure 5;

Figure 11 illustrates steps and messaging for creation of a new token where neither origin cluster nor destination cluster are ready for generative tokenisation;

Figure 12 illustrates schematically token migration from a source cluster which does not use generative tokenisation to a destination cluster which does;

Figures 13A and 13B illustrate the use of conventional and generative tokens respectively in a transaction; and

Figure 14 illustrates steps and messaging for creation of a new token where destination cluster is ready for generative tokenisation, but the source cluster is not.

Detailed Description

General and specific embodiments of the disclosure will be described below with reference to the Figures.

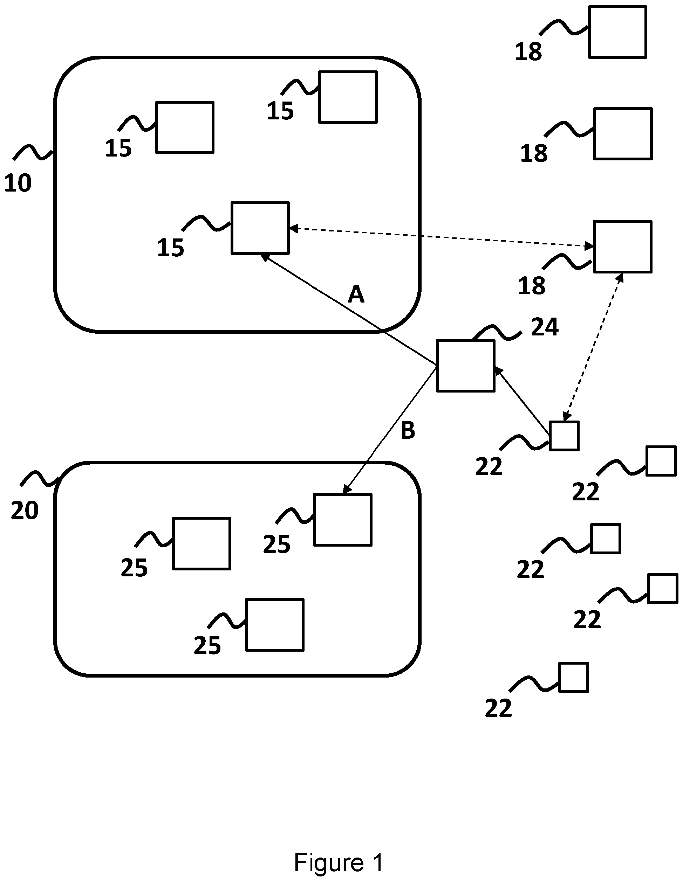

Figure 1 shows a general form of a credential processing system in which embodiments of the disclosure may be used. Two types of credential processing nodes are shown - first nodes 15 which are only capable of performing a first type of credential processing, and second nodes 25 which are primarily directed to performing the second type of credential processing. Here the first nodes 15 are shown as present in a first zone 10, and the second nodes are present in a second zone 20 - these zones may be, for example, different geographies, and use of zones here is primarily to illustrate that nodes of the same type will typically be grouped together in some way (though need not be). Credential processing is initiated by requests from users 22. These credentials are associated with authorisers 18 - a credential processing request may be for example to indicate that a user 22 is allowed by the authoriser 18 to take a particular action. An authoriser 18 may therefore interact with both a node 15, 25 and a user 22 associated with that authoriser (as indicated by dashed lines in Figure 1). This credential request is here directed to an intermediate processor 24 which can determine which node 15, 25 should handle the credential processing request. Embodiments of the disclosure are particularly relevant to situations where credential processing has formerly been carried out by one node, but now needs to be carried out by another - for example, where before a certain time the credential processing request would have been routed along path A to a first node 15, but now the credential processing request is now routed along path B to a second node 25.

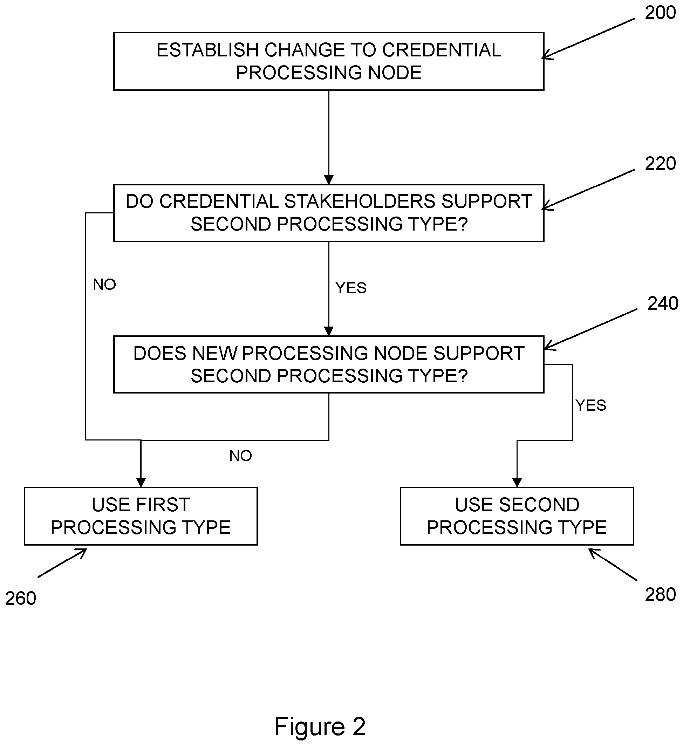

Figure 2 indicates a process for determining how to process credentials according to an embodiment of the disclosure in a system such as that shown in Figure 1. This process will be triggered by establishment 200 that a change is to be made to the credential processing node. This may have the consequence that the type of credential processing may need to change. Circumstance that may drive such a change are discussed in more detail below, but an example is that credential processing may be being moved to be more local to the user 22 or to the credential authoriser 18. It is then determined 220 whether the credential stakeholders - in this case, the user 22 and the authoriser 18, as the user 22 is using the credential to demonstrate that they are authorised by the authoriser 18 to take an action - support the second processing type. It is assumed that they support the first processing type, which may for example have been the only available processing type for the system before the introduction of the second processing type. If the answer is "yes", then it is determined 240 whether the new processing node supports the second processing type. If the answer to both these questions is yes, then the second processing type is used 280 - otherwise the first processing type is used 260, though this may be on a temporary or transitional basis until all credential stakeholders and processing nodes can support the second processing type.

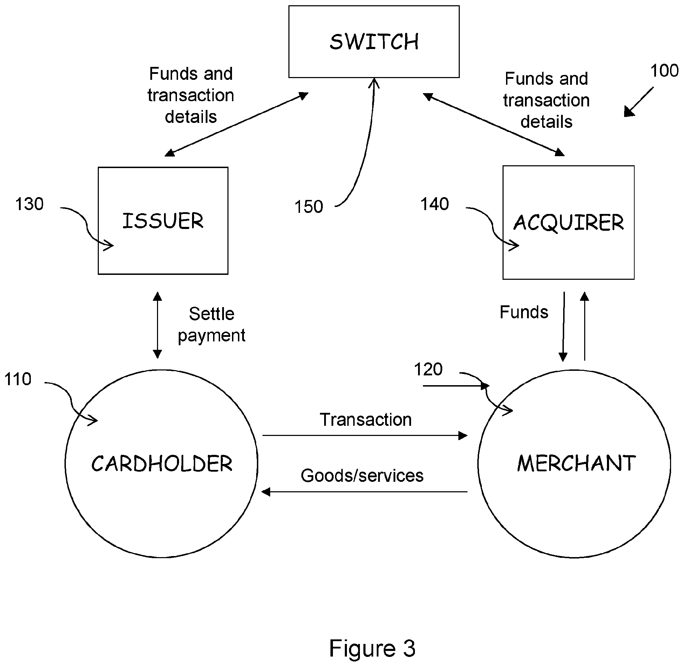

This method is of general application to systems of the type shown in Figure 1, in which credential processing is performed in a distributed but heterogeneous system for a distributed set of users and authorisers. It is appropriate for use in tokenization generally, in any context in which tokenization is used in a distributed system where credential processing is performed or performable at different nodes. Embodiments discussed in detail below relate to credential processing in respect of tokenisation and detokenization of transactions, particularly digital transactions. In such transactions, a token is used instead of a sensitive value (such as a Primary Account Number, or PAN, for a payment card), largely to reduce risk. In digital transactions carried out with a payment device such as a mobile telephone, tokenisation is well established, and is typically used in association with a digital wallet held on the payment device. The authoriser here is an issuing bank (or issuer), and the user is a cardholder having an account with the issuing bank. A transaction scheme for card payment will be described below with reference to Figure 3.

Figure 3 is a block diagram of a typical four-party model or four-party payment transaction scheme. The diagram illustrates the entities present in the model and the interactions occurring between entities operating in a card scheme.

Normally, card schemes - payment networks linked to payment cards - are based on one of two models: a three-party model or a four-party model (adopted by the present applicant). For the purposes of this document, the four-party model is described in further detail below.

The four-party model may be used as a basis for the transaction network. For each transaction, the model comprises four entity types: cardholder 110, merchant 120, issuer 130 and acquirer 140. In this model, the cardholder 110 purchases goods or services from the merchant 120. The issuer 130 is the bank or any other financial institution that issued the card to the cardholder 110. The acquirer 140 provides services for card processing to the merchant 120.

The model also comprises a central switch 150 - interactions between the issuer 130 and the acquirer 140 are routed via the switch 150. The switch 150 enables a merchant 120 associated with one particular bank acquirer 140 to accept payment transactions from a cardholder 110 associated with a different bank issuer 130.

A typical transaction between the entities in the four-party model can be divided into two main stages: authorisation and settlement. The cardholder 110 initiates a purchase of a good or service from the merchant 120 using their card. Details of the card and the transaction are sent to the issuer 130 via the acquirer 140 and the switch 150 to authorise the transaction. The cardholder 110 may have provided verification information in the transaction, and in some circumstances may be required to undergo an additional verification process to verify their identity (such as 3-D Secure in the case of a remote transaction - e.g., an online transaction with a server). Once the additional verification process is complete the transaction is authorised.

On completion of the transaction between the cardholder 110 and the merchant 120, the transaction details are submitted by the merchant 120 to the acquirer 140 for settlement.

The transaction details are then routed to the relevant issuer 130 by the acquirer 140 via the switch 150. Upon receipt of these transaction details, the issuer 130 provides the settlement funds to the switch 150, which in turn forwards these funds to the merchant 120 via the acquirer 140.

Separately, the issuer 130 and the cardholder 110 settle the payment amount between them. In return, a service fee is paid to the acquirer 140 by the merchant 120 for each transaction, and an interchange fee is paid to the issuer 130 by the acquirer 140 in return for the settlement of funds.

In practical implementations of a four-party system model, the roles of a specific party may involve multiple elements acting together. This is typically the case in implementations that have developed beyond a contact-based interaction between a customer card and a merchant terminal to digital implementations using proxy or virtual cards on user computing devices such as a smart phone.

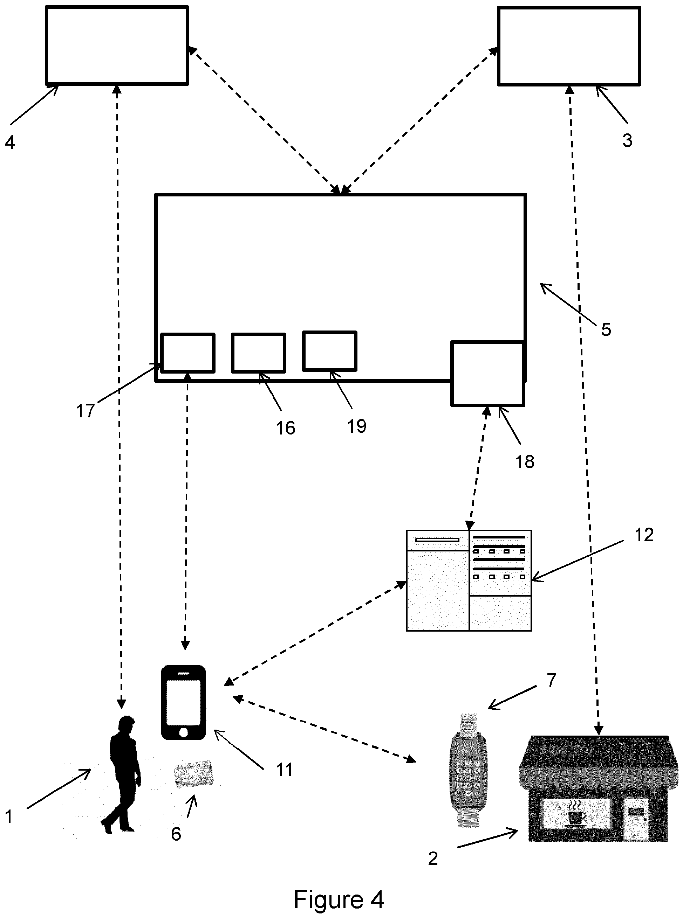

Figure 4 shows an architecture according to an embodiment of the disclosure appropriate for interaction between a cardholder and a merchant. This Figure shows a general-purpose architecture for reference but shows in particular elements of an architecture used when a cardholder carries out a digital transaction, for example with a merchant server.

For a conventional transaction, a cardholder 1 will use their payment card 6 - or a mobile computing device such as smartphone 11 adapted for use as a contactless payment device - to transact with a POS (Point of Sale) terminal 7 of a merchant 2. A POS terminal is the commonest form of terminal - more generally described as Points of Interaction (POI) - adapted to interact with a payment device. However, in embodiments relevant to the present disclosure, the cardholder will use his or her computing device - which may be any or all of a cellular telephone handset, a tablet, a laptop, a static personal computer or any other suitable computing device (here cellular telephone handset or smartphone 11 is shown) - and other computing devices such as a smart watch or other wearable device may also be used) - to act either as a proxy for a physical payment card 6 or as a virtual payment card operating only in a digital domain. The mobile phone (also referred to below as a smartphone) 11 may achieve this with a mobile payment application and a digital wallet, as described below. The smartphone 11 can use this to transact with a merchant POS terminal 7 using NFC (the Near Field Communication standard) or another contactless technology, or to make a payment in association with its wallet service as discussed below. However, online transactions with a merchant are of particular interest in connection with embodiments of the disclosure, rather than contact or contactless transactions with a merchant POS terminal 7. To make an online transaction, the smartphone 11 may also be able to interact with a merchant server 12 representing the merchant 2 over any appropriate network connection, such as the public internet - the connection to the merchant may be provided by an app or application on the computing device.

The transaction scheme infrastructure (transaction infrastructure) 5 here provides not only the computing infrastructure necessary to operate the card scheme and provide routing of transactions and other messaging to parties such as the acquirer 3 and the issuer 4, but also a wallet service 17 to support a digital wallet on the cardholder computing device, and an internet gateway 18 to accept internet based transactions for processing by the transaction infrastructure. In other embodiments, the wallet service 17 may be provided similarly by a third party with an appropriate trust relationship with the transaction scheme provider. To support tokenization, a token service provider 19 is present (again, this is shown as part of transaction infrastructure 5 but may be provided by a third party with appropriate trust relationships), and the transaction scheme infrastructure provides a digital enablement service 16 to support the performance of tokenized digital transactions, and to interact with other elements of the system to allow transactions to be performed correctly - this digital enablement service may include other elements, such as token service provision and digital payment application personalization with functionality and security parameters, such as transaction keys and public key certificates.

Generally, the tokenisation process is carried out by a transaction scheme or an appropriate service provider with the permission of the payment card issuer (the issuing bank with which the cardholder has an account). Conventionally, tokenised transactions are routed in the transaction scheme so that the PAN associated with the tokenised card can be recovered from a digital vault, also called a token vault (TV), allowing normal processing of the transaction. The data associating the issuing bank and the digital wallet provider (or token requestor) where a token is stored is maintained at a data centre within a distributed transaction systems and can be used to identify at an existing moment tokens associated with a specific issuing bank. Tokens may be requested by a number of parties with an appropriate relationship with the cardholder - these may be wallet providers (either banks themselves, or third party providers such as Apple Pay), eCommerce merchants establishing card-on-file arrangements, or other types of online provider such as messaging apps with integrated payment services).

For a tokenized transaction, the transaction is validated in the transaction scheme by mapping the cardholder token to their card PAN, checking the status of the token (to ensure that it is in date and otherwise valid) and any customer verification approach used. This allows the issuer to authorise the transaction in the normal manner.

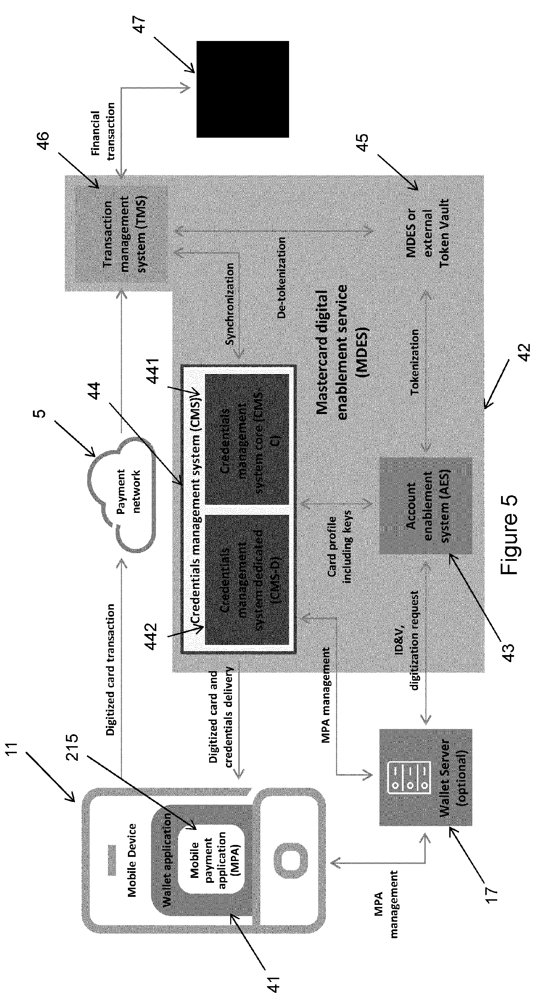

Figure 5 shows elements of a transaction infrastructure to support digitized payments from a mobile device in more detail. This Figure shows as a specific example the applicant's Mastercard Cloud-Based Payment (MCBP) architecture - this is exemplary rather than specific to the disclosure and illustrates how the architecture is used to support a mobile payment application 215 on a mobile device (such as smartphone 11) - here the mobile payment application 215 is shown as contained within a wallet application or digital wallet 41. Such a digital wallet 41 may communicate with a wallet server 17 to allow management of the mobile payment application, and it also can be used to request digitization of a payment card 6 to be used by the mobile device 11.

The Mastercard Digital Enablement Service (MDES) 42 performs a variety of functions to support mobile payments and digitized transactions. As indicated above, the MDES 42 is exemplary only - other embodiments may use digitization, tokenization and provisioning services associated with other transaction processing infrastructures, for example. The wallet server 17 is not a part of the MDES 42 - and need not be present, for example if the mobile payment application 215 is not embedded within a digital wallet 41 - but acts as an interface between the mobile device 11 and the MDES 42. The MDES 42 also mediates tokenized transactions so that they can be processed through the transaction scheme as for conventional card transactions. The following functional elements are shown within the MDES 42: the Account Enablement System (AES) 43, the Credentials Management System (CMS) 44, the Token Vault (TV) 45, and the Transaction Management System (TMS) 46. These will be described briefly below.

The Account Enablement System (AES) 43 is used in card digitization and user establishment. It will interact with the mobile payment application (here through the wallet server 17) for card digitization requests, and it will populate the Token Vault 45 on tokenization and will interact with the CMS 44 to establish a card profile with associated keys for digital use of the card.

The Credentials Management System (CMS) 44 supports management of cardholder credentials and is a key system within the MDES 42. The core system 441 manages synchronisation with the transaction system as a whole through interaction with the TMS 46 and manages the channel to the AES 43. The dedicated system 442 provides delivery of necessary elements to the mobile payment application such as the digitized card and credentials and keys in the form needed for use. This system may also interact with the wallet server 17 for management of the mobile payment application.

The Token Vault (TV) 45 - which is shown here as within the MDES 42, but which may be a separate element under separate control - is the repository for token information including the correspondence between a token and the associated card (as represented by its PAN). In processing tokenized transactions, the MDES 42 will reference the Token Vault 45, and tokenization of a card will result in creation of a new entry in the Token Vault 45.

Transaction Management System (TMS) 46 is used when processing tokenized transactions. If a transaction is identified by the transaction scheme as being tokenized, it is routed to the TMS 46, which verifies the transaction cryptogram produced in connection with the token and the transaction conditions and which detokenizes the transaction by using the Token Vault 45. The detokenized transaction is then routed to the issuer (here represented by Financial Authorisation System (FAS) 47) for authorisation in the conventional manner. The TMS 46 interacts with the CMS 44 to ensure synchronisation in relation to the cardholder account and credentials.

As digital transactions have become common and geographically widespread, decentralisation becomes necessary to achieve performance. In respect of use of tokens, this may mean that there is at least one backup Token Vault 45 available if the main Token Vault is offline for any reason. Moreover, there may need to be different MDES 42 systems (or parts of these systems) in different geographies, either to achieve performance targets, to satisfy local on-soil requirements for cryptography or performance of transactions, or both. This may mean that a token needs to be migrated from one geography to another. There are many ways in such decentralisation can be achieved - in principle any suitable architecture may be used to deliver services to clients, such as a public cloud, a private cloud, or a private distributed system. Transactions performed on a distributed system are usually coordinated across different nodes connected by a network, and where a node may be an aggregation of several computers and may cover more than one data centre with "real-time" connectivity and data sharing within a given node.

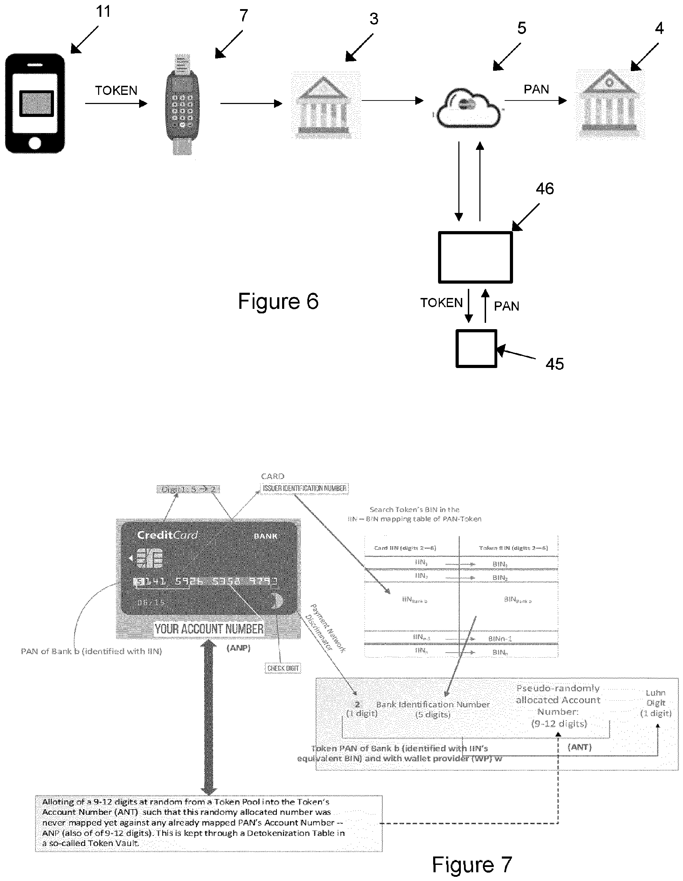

Figure 6 illustrates the steps involved in a digital transaction in relation to the use of tokens. A digital transaction is performed - here between a digital card in a mobile wallet of a mobile phone 11 and a POS terminal 7 in a contactless transaction - using a token in place of the PAN corresponding to the digital card. In order to be able to perform the transaction, the consumer must have authenticated themselves as the legitimate owner of the mobile wallet, and will also have selected a digital card from the mobile wallet to be used. If this card is tokenized, this establishes that when the transaction is presented for authorization, it will pass through an appropriate path in the payment network 5 that will lead to detokenization of the token. The transaction is performed between merchant's terminal 7, acquirer processor 3, and payment scheme 5 processor in a similar way to a chip-and-PI N transaction, but with the token performing the role of the PAN. Here the cryptogram produced by payment device 11 is verified by TMS 7 (instead of the FAS - the issuer), as the token takes the place of the PAN in the material encrypted in the application cryptogram generated by the mobile wallet as non-repudiable proof of the transaction. This cryptogram will also include various details of the payment and associated business conditions, and also a record of cardholder authentication's status on the device 11 (by indication of Consumer Device Cardholder Verification Method - CDCVM's status "True/False"). A CDCVM is an alternative to Cardholder Verification Method (CVM) suitable for use in the context of a payment device - existing forms of CVM (online PIN, offline PIN, signature) are used for chip-and-PIN type transactions.

The transaction passes through the normal path for authorisation - from the POS terminal 7 through the acquiring bank 3 to the payment network 5. In practice, it will be the acquirer 3 that directs the transaction to the appropriate payment network 5 (based on the BIN number at the start of the token - this is discussed further below), and the payment network 5 will then direct the transaction to the appropriate TMS 46 on determining that the BIN points to a particular Token Range. The transaction management system 46 interacting with the token vault 45 carries out detokenization, here using a detokenization table kept in the token vault where the token and the PAN are stored against each other, the PAN is recovered and the transaction can be authorised by the issuer in the normal manner after the authorization message request has been reconfigured with the PAN taken the place of the Token. Verification of the application cryptogram establishes that the transaction has been initiated by an authentic mobile wallet and one of its stored digital cards, hosted by a secure device, and that the cardholder has approved the transaction (using a CDCVM - such as fingerprint or facial pattern) to do so. The PAN is therefore used as in a normal transaction to indicate to the Issuer the source of funds (and the issuer for authorization of the transaction), but the use of a token "hardens" the PAN (in security terms) against eavesdropping attacks on the contactless channel between mobile phone 11 and the POI contactless terminal 7.

There are a collection of interacting features that are used to provide security for digital payments. Tokenization is used to protect the PAN in transaction channels. A digital card is authenticated to the payment network through application cryptogram verification, and to a point-of-sale terminal through Combined Data Authentication (CDA) through EMV processes (EMVCo provides standardization of processes for payment networks, with standards available from emvco.com). Cardholder verification is provided through a CDCVM, and its result is included in the computation of the application cryptogram.

A conventional approach to provisioning of tokens will now be described with reference to Figure 7.

The allocation of a token to a PAN uses randomness - strictly, a pseudo-random permutation - in a keyless encryption function for which the encryption and decryption domains are the same, and on allocation of a token, the token is removed from the token pool so that the same token cannot be allocated to two different PANs, to the same PAN in two different devices, or to the same PAN for interaction of the mobile app on two different channels.

Table 1 - Digit significance in PAN and conventional EMV token

| | Digit 1 | Digits 2-6 | Digits 7-18 (max) | Last Digit (e.g., 19) |
|---|---|---|---|---|
| | *Payment Scheme Number* | *Issuer/Bank Identification Number (IIN/BIN)* | *Account Number (AN)* | *Luhn Digit* |
| PAN | 5 | IIN | ANP (Account Number of PAN) as written in the physical card's PAN | X |
| Token 1 | 2 | BIN | ANT (Account Number of Token) randomly allocated by MDES with uniqueness for an ANP. | Y |

Table 1 shows how the pseudo-random permutation process of conventional EMV works in generating the digits of a token. This is broken down visually in Figure 7, and explained in more detail below. The first digit is simply a payment scheme number, so that tokens - as for PANs - can immediately be directed into the correct payment scheme (such as Mastercard) without any complexity for the initial routing. The payment scheme will consequently receive only the correct PANs and tokens, and will know which is a PAN and which is a token.

The second tranche of digits from 2-6 identifies the issuing financial institution. In a PAN, this is an Issuer Identification Number (IIN) - these are publicly known numbers. Each scheme provider will have a matching Bank Identification Number (BIN) for a digital card product - these numbers, which are typically not well-known, are distributed by scheme providers to participating financial institutions to allow digitized transactions to be managed through arrangements such as MDES (as described above). While an IIN and a BIN will relate to the same financial institution, they will typically be mapped to different account ranges for payment card products and corresponding digital products. The tokenisation process may in practice be initiated when tokenisation is requested or required for all payment cards (i.e., all their PANs) hosting a certain payment card product of a bank (here, a specific IIN) for a certain BIN range of the corresponding digital product - the key stakeholders here are the wallet provider (w) and the issuing bank (b). All Tokens are given an expiration date as indicated in the Expiry Date Table or as computed based on the tokenization date.

The third tranche of digits from digits 7-18 (the total number of digits in this field may differ for different card products between 9 and 12 digits) represents an account number for a PAN (ANP) and an Account Number of Token (ANT) for a token. The generation of an account number is up to an individual issuer and may be determined in a large number of ways (outside the scope of this discussion). An ANT is pseudo-randomly assigned from an Account Number Pool of available ANTs allotted for the equivalent card product's PAN. The mapping between the account number's ANP and the corresponding ANT needs to be kept secure, as discussed further below - it also needs to be made unavailable for use by any other PAN (and not to have already been used by another PAN). The final digit of either a card or a token is a Luhn check digit - this is simply calculated over the digits of the PAN or the token using the Luhn algorithm.

In this conventional approach, the mapping between PAN and token is kept in a Token Vault - while some digits of the token can be determined as needed, the mapping between the account number of the PAN (ANP) and the ANT cannot be. Difficulties of this approach are the need to check on each token allocation that the token has not already been allocated, and need to keep all elements of the PAN to token mapping at a security level appropriate to encrypted data, which is resource consuming and expensive. For a desired security level, this would lead to token vaults needing either to be secured in Hardware Security Modules (HSMs), which is an expensive solution, or to be stored in an encrypted form, which leads to further time consumption with a decryption step, which is significant as this is time added to the processing of a transaction. Moreover, this type of approach does not provide a satisfactory approach for confidentiality of the token (since the owner of the token - the bank or issuer- must rely on the payment scheme provider to hold detokenization information with sufficient security) or for privacy of the token (for similar reasons).

The conventional processing approach for tokens as described above can be considered a first credential processing type in the context of the present disclosure. Once tokens are created, they are stored in token vaults, typically local to a processing node or at any rate within a geographical region containing its designated processing node. If there is a new designated processing mode associated with the token - for example, the payment card is now associated with a different geography - then in this approach the token and its associated data may need to be moved from one token vault to a different token vault. An exemplary process for this is described in the applicant's co-pending European patent application no. 23195827.3, filed on 6 September 2023 (incorporated herein by reference to the extent permitted by law). However, in cases of interest here, a second credential processing type also exists. In an exemplary second credential processing type, this pseudo-random allocation is replaced by a process in which the ANT is generated. In one mechanism, this is calculated from the account number using a keyed cryptographic mechanism - as is described in the applicant's co-pending European patent application no. 23195829.9, filed on 6 September 2023 (incorporated herein by reference to the extent permitted by law), this may be a Field Preserving Encryption (FPE) mechanism. Using such a technique, the resulting ANT can preserve the restrictions of the input set of PAN account numbers, and in this way the token can be used the same way as a PAN - specifically here, it can be directly accommodated in the DE2 message field of a 0100-authorization message according to the ISO-8583 standard (or any future equivalent). The token is therefore effective to route the transaction from the merchant's POS to the TSP (as described above for MDES), directly. On arrival at the TSP during a payment authorization transaction, the TSP will unpack the token and decrypt the ANT into the account number of the PAN and recover the PAN, without any need to refer to a detokenization table with a token-PAN mapping. Using this approach the PAN is encrypted to become an ISO-8583 token - a process that can be installed on a mobile device by appropriate personalization or carried out in a token server.

The token in this case is computed rather than assigned, but is still capable of routing the message appropriately during the authorisation process (here, so that it is routed to MDES for decryption). While MDES is used for the example discussed here, the skilled person would appreciate that the same principles can be used in any comparable payment scheme using tokenisation. Using the decrypted PAN, MDES can route the transaction for authorization as for conventional tokenization. This approach therefore allows tokenization and detokenization without any need for a token vault or any other centralized detokenization repository - the amount of information that needs to be kept secure is much more limited. Moreover, there is no need to provide any "blob" of encrypted information - one known solution to passing a PAN securely is to store it in encrypted form in an appropriate "spare" space in transaction information, such as in the Issuer Discretionary Data (IDD) field of File Control Information (FCI) - (FCI and IDD are EMV terms). It is highly desirable not to rely on the provision of such a "blob", as this is considered to be a security or privacy risk in many jurisdictions (and is consequently not allowed). This is not an issue if the token has the same general structure as a PAN - it is therefore apparent that it just has the normal functions of a PAN as it would not be possible to encode additional information effectively.

While suitable cryptographic mechanisms for a generated token are described in more detail in European patent application no. 23195829.9, requirements for ensuring that the ANT so generated can perform its necessary function and suggested parameter choices for token generation are described below. Firstly, requirements for the generation process are as follows.

Input and Output format is the same. This allows the result of transforming the PAN - the token T - to have the same effect as the PAN in routing the transaction over (here) an ISO-8583 payments network, while also protecting the PAN from cross-channel contamination and without requiring modifications to the messaging itself (which would in practice prove a major bar to implementation. The token T therefore has the form:

$$T = 2\|BIN\|ANT\,(9-12\ digits), cryptographically\ computed\|Luhn\ Digit$$

which fits into the DE2 field of authorization messages in the same way as the PAN.

Permutation is strictly injective - This means that collisions should be avoidable - there are not different account numbers ANP (Account Number of PAN) in the input which will lead to the same ANT in the output. Desirably, finding such collisions should be as challenging as breaking the underlying cryptographic primitive on which the cryptographic mechanism (CM) is built.

Input for FPE includes only integer numbers in finite input interval - In one approach, the CM may simply encrypt decimal digits into decimal digits according to the parametric inputs used. This allows pre-computation to be used, allowing tokenization and detokenization to be as computationally efficient and secure as the conventional approach but without the same storage needs. In another approach, there may simply be creation of a positive integer number in a controlled range of ANT (Account Number in Token) for ANP (Account Number in PAN) - this is appropriate for computation on-the-fly, an embodiment of which is described below.

Permutation has variable mapping formula - This variability relies on the parameters employed. These may be of multiple types:

- Processing parameters, e.g.

    - Channel type used for cryptogram (face-to-face, remote, contactless, etc.)
    - CM for generating permutation (options discussed below)

- Business parameters, e.g.

    - Bank Identifier

    - Product Identifier or Name

- Operational parameters, e.g.

  - Token requestor
  - Wallet provider
  - Operational security environment...

    - ... for payment app
    - ... for wallet app
    - ... for CVM app

  - Type of interaction channel
  - Type of pseudo-random permutation

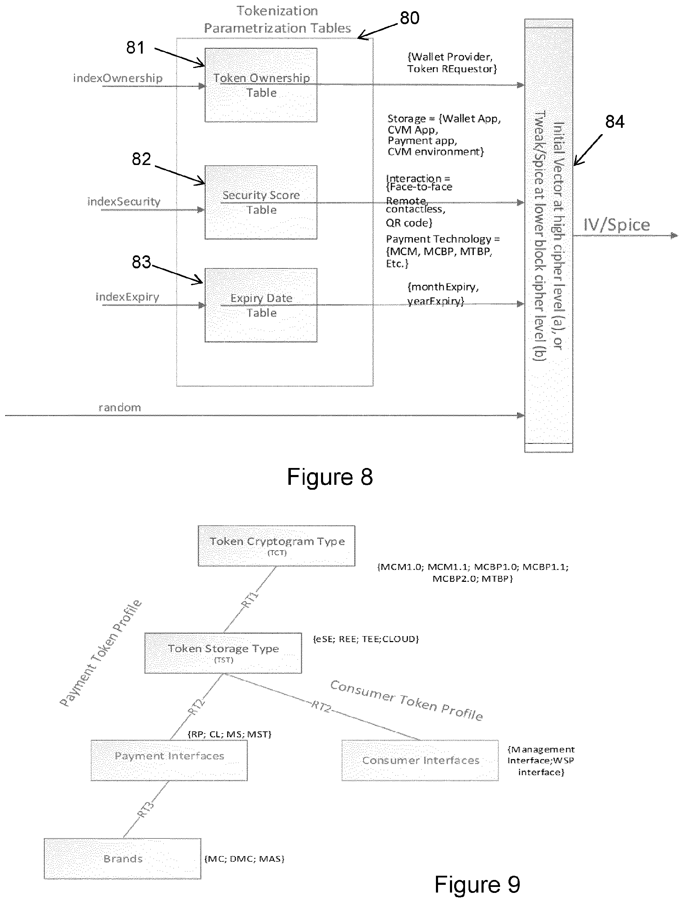

Alternative encryption mechanisms are described in European patent application no. 23195829.9 - these can include pre-computation using a block cipher (such as AES - here meaning Advanced Encryption Standard, and generally indicated in a form such as AES-256, where 256 is the key length) in and computation on-the-fly using a tweakable block cipher such as the "Hasty Pudding Cipher" (HPC) of Richard Schroeppel. Such ciphers require an additional input- this can be described as an Initial Vector (IV) for a conventional block cipher or as a Tweak, or Spice, for HPC - and these can be provided in the same way using appropriate input parameters, as described below for one exemplary embodiment with reference to Figure 8, where Token Parameterisation Tables 80 are used for calculation of the IV (or Tweak/Spice) 84.

As can be seen in Figure 8, the parameters are here provided through Token Parametrization Tables 80 - these comprise system parameters that must be kept secret in the HSM. These parameters have been used to provide tokens to devices when a tokenization demand was originally made (the user payment device will not itself perform such calculations - it will simply use a token that has been provisioned to it). Their content should be updatable by trusted personnel responsible for relevant aspects of the payment network, for example by adding/removing lines while the processing/business/operation configuration of the system changes. However, these changes are performed such that the index to a parameter (such as Ownership, Security Score, Expiry Date, etc....) stays the same, since they are personalized in the token. These Tokenization Parametrization Tables should be configurable in any nodes where payment schemes together with concerned TSPs are receiving payment transactions. Exemplary approaches for each parameter are discussed below.

Token Ownership 81 - this table may, for example, have each line encoding a wallet provider identifier, and a token requestor identifier combination. The indexOwnership will be a pointer with four digits specifying the Token Ownership table's line (between 0000 and 9999) number where the server can always retrieve one of the ten thousand combinations representing the (WP_ld, TR_ld) to compute the IV/Spice computation (as per Figure 8). WP_ld and TR_ld are here identifiers for the Wallet Provider and Token Requestor respectively - the terms w and r are also used further below.

Security Score 82 - this table may, for example, have each line encoding the security features of a mobile wallet and particularly of its component elements, exemplary the following parameters: technology used for international payment, wallet app provider (operator) identifier, wallet app storage type, CVM app storage type, payment app storage type, and the type of the environment used for CVM inserting. Figure 9 shows a parameter tree indicating how these security features may be encoded into an element of the Security Score table, by following a trajectory, and only one, in the parameter tree and the table below - this table uses describes certain Mastercard-specific options, but equivalents may be found in other payment schemes Here REE stands for Rich (Operating System) Execution Environment, SE stands for Secure Element, and TEE stands for Trusted Execution Environment - an REE is a "standard" operating environment whereas a TEE is provided with isolation features, typically that limit how it can interact with an REE.

Table 2 - Wallet Technologies and Security

| Technology used for international payment | Operator | Wallet App | CVM App | Payment app | CVM inserting environment |
|---|---|---|---|---|---|
| MPA (Mobile Payment App) | Apple | REE | SE | SE | TEE with integrated sensors |
| MCBP (Mastercard Cloud-Based Payment App) | Google Wallet App Provider | REE | Cryptographically secured with White Box Cryptography (WBC) | WBC | Cryptographically secured environment with integrated sensors in WBC. |

(continued)

| Technology used for international payment | Operator | Wallet App | CVM App | Payment app | CVM inserting environment |
|---|---|---|---|---|---|
| MTBP (Master-card Trusted-Based Payment App) | Samsung | REE | TEE | TEE | TEE with integrated sensors |
| Two-path MPA | 5G Mobile Operator | 5G REE | WBC | WBC + Edge 5G Secure Server | TEE with integrated sensors |

The indexSecurity will be a pointer with three digits specifying the Security Score table's line (between 000 and 999) number where the server can always retrieve one of the one thousand combinations representing a security parameter tree path for the device involved in transaction, to compute the IV/Spice computation 84 (as per Figure 8).

Expiry Date 83 - this table may, for example, have each line encoding the month expiry and year expiry combination, on 4 digits: the first two digits encodes the month expiry, and the next two encodes the year expiry. The table should have space enough to encode all combinations from: first month of the current year (at indexExpiry = 0000) till the last month of the current year plus hundred year (at indexExpiry = 1299). Nevertheless, each operator has the right to choose the number of years for the validity of the Token (e.g., maximum five years, or maximum 10 years, etc.). If the secure storage space is a problem, a computational economical method can be used: instead of providing an indexExpiry, the operator may provide a delta added to a reference date -e.g., when the tokenization transaction of the Token took place -- kept secret by the TSP to get the actual expiration date.

Various approaches can be taken to provide a key for the cryptographic method. One approach, similar to that used for key generation in existing EMV methods, is to use a master key for the payment network which is then diversified using parameters for the issuer and then for the specific product to produce the key for the cryptographic mechanism. Other approaches can be used - for example, a key could be selected pseudo-randomly from a key set specific to a device-TSP channel, with a key list that is unique and specific to the channel.

The tokenisation process would here typically be initiated when tokenisation is requested for a Wallet Provider (w) and Token Requestor (r) pair - reflecting a valid indexOwnership in the appropriate Token Ownership Table, as discussed above - requiring tokenization of all payment cards (i.e., all their PANs) hosting a certain payment card product p of a bank b (here, a specific II N) for a certain BIN range of the corresponding digital product (according to the IIN-BIN tables as agreed between payment network provider and issuer (see Figure 7). The corresponding tokens are provided for being provisioned within a category of consumer devices with a security characterization given by the indexSecurity in the Security Score Table. Each PAN's encrypted token is set in the consumer's device corresponding to their identity. All tokens are given an expiration date as indicated in the Expiry Date Table or as computed based on the tokenization date.

Data management within these decentralised distributed transaction systems can be problematic when data stored at one data centre is migrated to another data centre located at a different geographical location, particularly because different service instances need to relate to each other. In addition, due to the exceptionally large amount of data stored in these centres, a further difficulty from the data migration is ensuring that the migration is achieved without any loss of data.

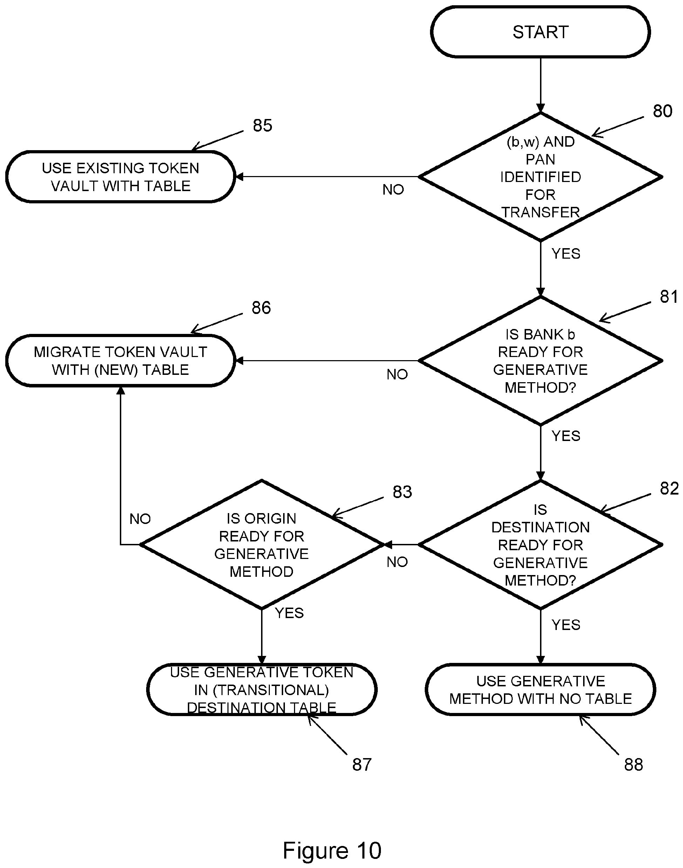

Due to processing or administrative reasons, such as to fulfil requirements associated with the credit or debit card's country of issue or the user's country of origin, there may be a need for a second node to assume responsibility for credential processing from a first node. Where the first credential processing type is used, then this will require transmission of tokens stored at a Token Vault of a data centre located at one geographical location to a Token Vault of a data centre located at a second geographical location. This provides various technical challenges. It may be preferred to switch to the second credential processing type if possible - this will be done if the credential stakeholders and the destination processing node permit - this is described in more detail with reference to Figure 10 below.

Figure 10 provides a detailed indication of how credential processing - specifically, detokenization to enable a transaction to be authorised - can be carried out according to an embodiment of the disclosure in a distributed MDES system in which processing nodes may be adapted to use either tokens which are provisioned by allocation and storage in a Token Vault (the first credential processing type) or tokens which are generated using a cryptographic process (the second credential processing type). As stated before, MDES is used as an example here, but this approach is directly applicable to the TSP (Token Service Provider) of any similar payment scheme, and it could generally be applied to other environments using tokenisation where tokenisation is decentralised. The position is that indicated in Figure 1, where the MDES (as shown in Figure 5) has been disaggregated into multiple processing centres in different zones 10, 20 - in this case the first zone 10 contains processing nodes or processors 15 adapted to use the allocation protocol, and the second zone 20 contains processing nodes or processors 25 adapted to use the generative method. Here, a payment device is the user 22, an issuing bank is the authoriser 18, and the intermediate processor 24 is the entry to the transaction processing scheme. Here, the token is to be migrated from an origin processor - as represented by the original path A - to a destination processor - as represented by the destination path B.

The different possible migration possibilities are considered below with respect to Figure 10. Determination of whether or not a token is to be migrated, and details of how messaging is achieved to ensure that a request to process token-related information is passed to the correct processor, are both outside the scope of the present mechanism, save to note that discussion of token allocation and generation above provides a mechanism to ensure that tokens can be routed appropriately.

The first step is to determine 80 whether the token is identified as being capable of migration - if not, then there will be no change to the token, and it will remain in its original state, which will be to use the conventional approach of token allocation, with the mapping of the token to a PAN being stored 85 in a table in the (existing) token vault.

If the token is capable of migration - which requires here that both the bank and wallet pair (b,w) and the PAN have been identified as capable of migration - the next step is to determine 81 whether the key stakeholder, the bank b, is ready for the generative method for tokenisation and detokenization to be used. If not, then migration can be performed, but the allocation method must still be used - in this case, the token will be migrated 86 from a token vault supporting an origin processor to a token vault supporting a destination processor. A method of migrating tokens from one token vault to another suitable for use in these circumstances is set out in the applicant's co-pending European patent application no. 23195827.3, which is incorporated by reference to the extent permitted by law.

If the token is capable of migration and the bank is ready for the generative method to be used, the next step is to determine 82 whether the destination processor is able to use the generative method. If so, then on migration of the token the generative method can now be used 88. As a token allocated under conventional method will not follow the token generation rules, this will require a new provisioning of a token to the user device associated with the PAN. However, once this provisioning has been carried out, then the generative process can simply be used with no need for a table.

If the destination processor is not able to use the generative method, then the next consideration is whether the origin processor is able to use the generative method. If neither the destination processor nor the origin processor is able to use the generative method, only the conventional allocation method can be used, and again the token may be simply migrated 86 from the token vault supporting the origin processor to the token vault supporting the destination processor.

A possible, if rare, case is for the origin processor to be using the generative method but for the destination processor to be using the conventional allocation method. This will not be the normal case if the system is being progressively migrated from the allocation method to the generative method, but it may still occur. If so, then there will be an existing generated token at the origin processor, but the destination processor will not be able to use the generation process and will have to use a stored mapping. There will however be no need to provision a new token, as the encrypted PAN representing the new token can be treated in the same way as an allocated token and the mapping simply provided 87 to the destination processor when needed. While waiting the destination processor to learn how to decrypt a token into a PAN, according to this second method, the encrypted PAN representing the new token may be for example stored in the intermediate processor 24 (see Figure 1).

While the above embodiments relate specifically to the migration of tokens, it will be appreciated by the skilled person that the same principles may be employed for the migration of any other credential, and may be used in contexts that are not financial. For example, the same approach may be used to migrate a user's credential used for access control from one geography to another geography.

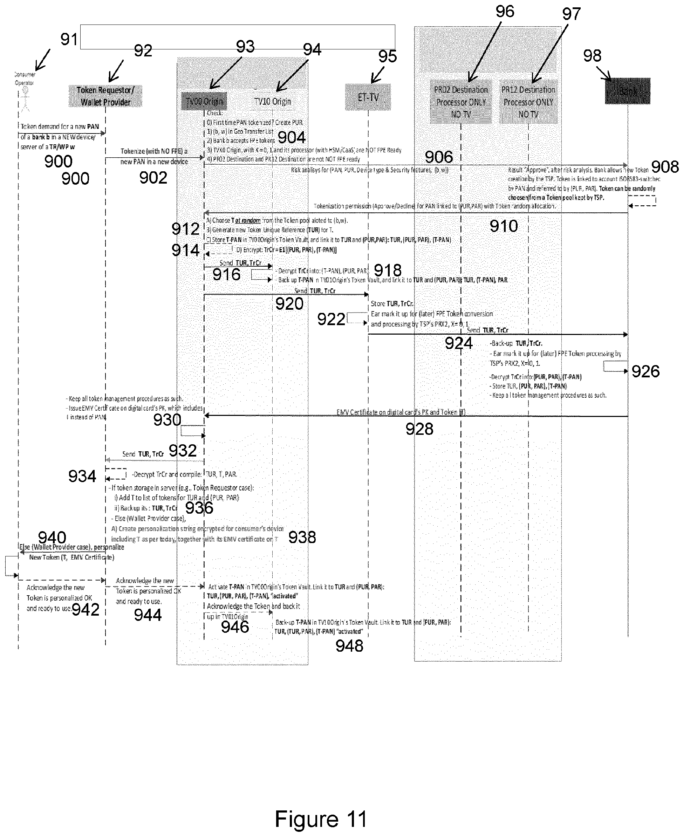

A process of tokenization where source and destination processors are only able to use the first method will now be described with reference to Figure 11. Relevant parties are the consumer, operating through their payment device 91, the wallet provider 92 (who will be requesting the token), the origin processor 93 and the backup origin processor 94, a token transfer vault 95 to support transfer of tokens between geographies, the destination processor 96 and the backup destination processor 97, and the provisioning bank 98. In this case, tokenization does not involve the destination processors 96, 97 at all, with migration only marked by an appropriate recordal in the token transfer vault 95. The steps set out in Figure 9 are as follows.

First of all, a demand for a new token - in respect for a new PAN from a bank b - is created at the payment device 91 and transmitted 900 to the wallet provider (w) 92. The wallet provider 92 makes 902 this tokenization request to the origin processor 93. Before taking this request further, the origin processor 93 makes a series of checks 904. First of all, the origin processor 93 checks to see if this is the first time that the PAN has been tokenized - if so, a PAN Universal Reference (PUR) is created - this may be used by some wallet providers (such as Apple Pay) to re-digitize a payment card so that a PAN does not need to be communicated from the cardholder. A PAR (Payment Account Reference) is also created - this can be used to link tokenized and PAN-based transactions, for example so that merchants can identify rewards due to use of a particular PAN. These references are used, as noted above, in certain transaction situations and are desirably also held with the PAN in the detokenization table in conventional detokenization arrangements. The origin processor 93 further checks to see if the bank and wallet provider combination are designated for migration - in this case, they are. The tokenization status of the bank, the origin processors and the destination processor are all established - here, the bank would support the second process for tokenization, but neither the origin processors or the destination processors are ready for this. Using this information, the origin processor 93 passes 906 the tokenization request to the bank 98 for approval after risk analysis - the message includes PAN, PUR, the payment device type and its security features, and the bank and wallet provider combination.

The bank 98 now performs risk analysis, and if tokenization is approved, the bank allows 908 new tokenization (to be provided by a token service provider at the origin). The token may be conventional, operating in accordance with ISO8583, relating to a PAN and referred to by (PUR, PAR), and here will randomly chosen from a token pool kept by the token service provider. Tokenization permission is then sent 910 back to the origin processor 93 identifying the PAN and the linked (PUR, PAR) with the indication that the token is to be allocated randomly. The origin processor 93 then performs 912 the tokenization with its associated TSP: the token T is chosen at random from a token pool allocated to the bank/wallet combination (b, w); the token T is given a Token Unique Reference (TUR), and the token/PAN combination (T-PAN) is stored in the origin processor's token vault and linked to TUR and (PUR, PAR) as well. An encrypted reference TrCr is then created 914 using an encryption process E1 - here, $TrCr = E_i[PUR,PAR),(T-PAN)]$. This encryption process E1 is known to origin and destination processors, the bank and the wallet provider, and allows for decryption to enable PUR, PAR and T-PAN to be recovered.

Once created, the token unique reference TUR and the encrypted token information TrCr is disseminated to the other parties that need to use the token. First of all, backup is provided - the origin processor 93 sends 916 TUR and TrCr to the backup origin processor 94, which decrypts TrCr and stores 918 T-PAN in its own token vault with a link to TUR and (PUR, PAR). The origin processor 93 also sends 920 TUR, TrCr to the token transfer vault 95 - as the token is for a (b, w) combination marked for migration - where TUR, TrCr is stored 922 under an appropriate migration flag. Migration will take place subsequently when triggered (for example, this may be on use in the destination geography). Here, the bank 98 is then notified 924 of the TUR, TrCr information. The bank 98 can also decrypt TrCr, and now has (and can back up) TUR and TrCr and (from TrCr) PUR, PAR and T-PAN, allowing it to perform 926 all necessary management procedures - it will also note that this token is marked for future migration. Possession of this information allows the bank 98 to generate and send 928 an EMV certificate on the digital cards public key and token to the origin processor 93 - while this is shown as transmitted directly from the bank 98 to the origin processor 93, this may in fact be routed through the token transfer vault 95, following the opposite path to the notification to the bank. The origin processor 93 is now also equipped 930 with all that it requires, including the EMV certificate, and it can now provide 932 TUR and TrCr to the wallet provider 92.

The payment device 91 can now be provisioned by the wallet provider 92. The wallet provider decrypts 934 TrCr and stores TUR, T and PAR. Different approaches are now available depending on whether the wallet provider stores the token itself, or provisions the payment device 91 with the token. If is the former, the token T is added 936 to a list of tokens for the TUR and (PUR, PAR) and backed up, and will be used when a transaction takes place. If the latter, then a personalization string is created 938 encrypted for the payment device 91 (including both T and the EMV certificate). This is provided 940 to the payment device 91, which acknowledges 942 receipt of the token and readiness for use. In either case, the wallet provider 92 can now acknowledge 944 to the origin processor 93 that the token is ready to use. The origin processor 93 now activates 946 the token combination T-PAN in its token vault - TUR and (PUR, PAR) are now activated. The last step is for the origin processor 93 to back up 948 T-PAN to the backup origin processor 94, which also records T-PAN as activated.

The Figure 11 approach will be used when there both origin and destination are using the first approach, both use token vaults, and there is no particular incentive to progress migration. The situation is different when the destination is ready for the second approach, using distributed tokenization and detokenization. The origin processors 93, 94 may use either the first approach (with centralized Token and PAN pair storage in token vaults) or the second approach (with FPE-based distributed tokenization and detokenization), but the position with respect to the destination processors 97, 98 is key. A different approach can be used if the destination processors and overall system security satisfy the following conditions:

a. The destination processors have an HSM or a Cryptography as a Service (CaaS) API interface equipped for FPE encryption and decryption for token processing;
b. The HSM/CaaS is set up with cryptographic material for each bank/wallet (b,w) pair; and
c. Consumer devices are secure enough to keep their own Token-PAN mapping (or can access wallet servers to access this) - this means the destination processors need only perform decryption to compute the target PAN from the FPE encrypted token, as the consumer device (or the wallet server) provides the mappings itself through the transaction.

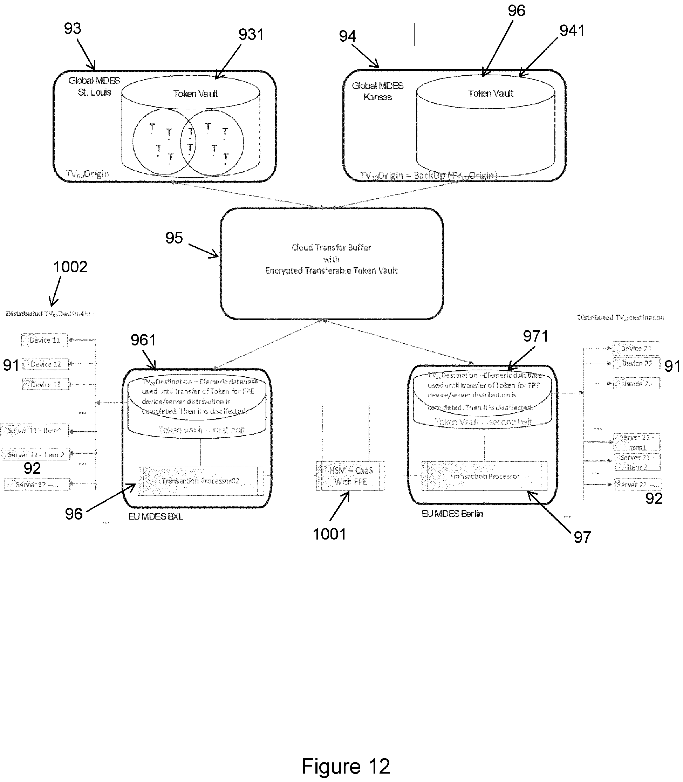

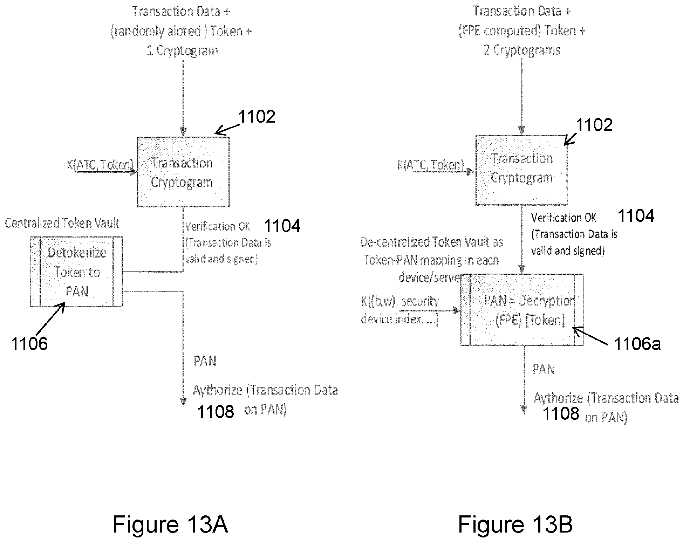

Where this applies, a new FPE encrypted token can be issued directly from a PAN. The two major changes associated with this process are illustrated in Figures 12, 13A and 13B. The first of these is the decentralization and eventual phasing-out of the token vault database, as shown in Figure 12. The second of these is the different approach to processing of a payment transaction, shown in Figures 13A and 13B.

Figure 12 shows in more detail the processor and token vault structure where the origin has conventional token vaults, but where the destination is adapted to use the second approach with decentralized tokenization and tokenization. The origin processor 93 (represented by the relevant MDES) and the backup origin processor 94 each has a conventional token vault 931, 941 with token-PAN pairs. Some of these will be marked for migration. Pairs marked for migration will at some point be transferred to the token transfer vault 95. The destination processor 96 and backup destination processor 97 have a different structure. Both processors have access to either a suitably programmed HSM or CaaS provider 1001 which is adapted to enable the processor to perform Field Preserving Encryption as required for tokenisation and detokenization. In addition, each processor comprises a token vault 961, 971, but this is for temporary, rather than permanent use - token-PAN pairs will be held here until adoption of the second approach is complete, but when the tokenisation/detokenization process is fully decentralized for a migrated domain, token vaults 961, 971 will be taken out of use for that domain. When the second process is fully in use, the status of the backup destination processor may change, and the destination processor 96 and the backup destination processor 97 may simply be used as alternatives, and are here shown as the preferred pathways for different sets 1002, 1003 of user devices 91 and wallet service servers 92.

Figure 13A and Figure 13B shows the different approaches used in transaction processing with the first and second approaches to tokenization and detokenization. Figure 13A shows the conventional approach in which the token is held in a token vault as a token-PAN pair. In creating the application cryptogram (AC) for the transaction at the payment device, the token associated with the payment device for that bank and wallet combination is used - an application cryptogram is generated 1102 using an appropriate key K derived from the application transaction counter (ATC) and the token. AC and ATC are standard EMV terms. This is received at the TSP processor, which verifies 1104 the application cryptogram. It does this by comparing the cryptogram received from the merchant with a cryptogram that the processor computes using the token value and the transaction details with the key, which the TSP processor also has the information to determine as it will also be able to establish the transaction counter value in the relevant payment device. If this process succeeds, the TSP processor considers the token to be eligible for use in a transaction, and it will refer to the token vault to detokenize 1106 the token to its associated PAN. The PAN is then used to make an authorization request 1108 for the transaction to the relevant issuer.

Figure 13B shows the progression of a transaction where the second approach is used. Here the token has been calculated by the payment device 91, but used for generation of the application cryptogram as before. Verification 1104 takes place as before - this step is not dependent on the tokenisation/detokenization approach used, so it is unchanged. If verification is successful, then the token can be detokenized, but this now requires a different approach 1106a. This approach involves using the predetermined FPE approach, using predetermined features of the device or account - these may be setup in advance in the HSM before payment processing for a given (b,w) pair. Detokenization reveals the PAN, this time by calculation. The PAN is then used to make an authorization request 1108 for the transaction to the relevant issuer as before.

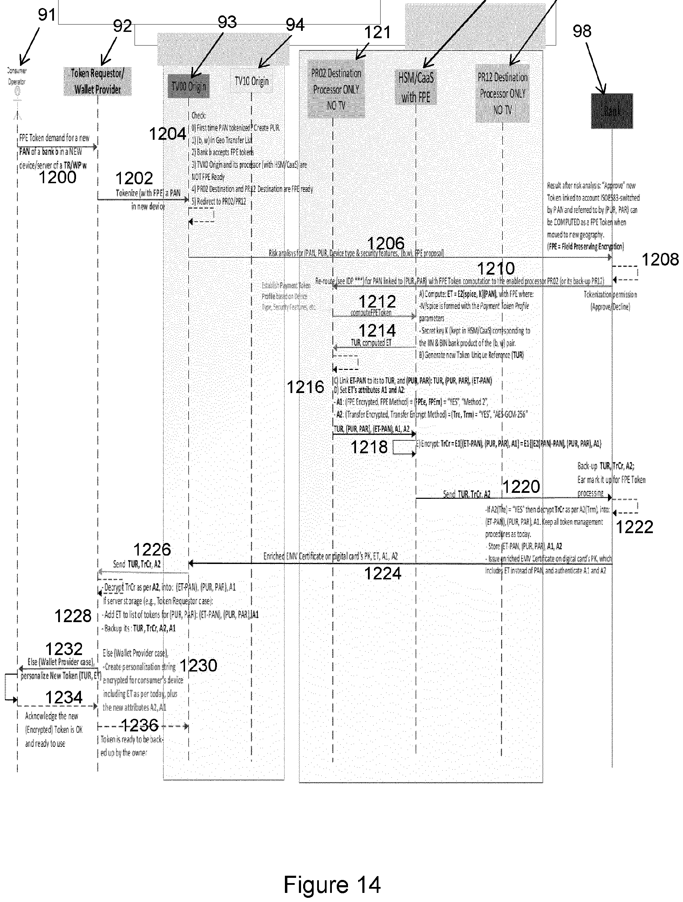

Figure 14 shows a tokenization protocol for when the origin cluster is only adapted for the first approach, but where the destination cluster is adapted for the decentralized second approach, and the payment device is also adapted to use the second approach. In this, case, it is desirable for the migration to take place directly so that the second approach can be used. Most parties (payment device 91, wallet provider 92, source processor 93 and backup source processor 94, and bank 98) are as before, but the destination cluster has different roles, and there is also no role needed for a transfer vault as the token never needs to be transferred. The destination cluster now comprises a first destination processor 121 and a second destination processor 122, both in communication with a cryptographic service element 123 (which may be an HSM or a CaaS connection) adapted to perform the necessary FPE operations. The process steps are now as described below.

As before, a demand for a new token - in respect for a new PAN from a bank b - is created at the payment device 91 and transmitted 1200 to the wallet provider (w) 92. The wallet provider 92 makes 1202 this tokenization request to the origin processor 93 - this tokenization request may include an indication that decentralized encryption/decryption is an available option for that (b,w) combination and that payment device. Before taking this request further, the origin processor 93 again makes a series of checks 1204. First of all, the origin processor 93 checks to see if this is the first time that the PAN has been tokenized - if so, a PAN Universal Reference (PUR) is created. The origin processor 93 further checks to see if the bank and wallet provider combination are designated for migration - in this case, they are. The tokenization status of the bank, the origin processors and the destination processor are all established - here, the bank would support the second process for tokenization, and the destination processors are ready for this, but the origin processors are not. Using this information, the origin processor 93 passes 1206 the tokenization request to the bank 98 for approval after risk analysis - the message includes PAN, PUR, the payment device type and its security features, and the bank and wallet provider combination - but in this case the message also indicates that the tokenization process should be handled by the destination processors, which is the final determination made by the origin processor 93 in its initial checks.

The bank 98 again performs risk analysis, and if tokenization is approved, the bank allows 1208 new tokenization, but this time by the decentralized second approach using FPE on switching to the new destination geography - this means that the tokenization process will be carried out by the destination processor 121 (or the alternative destination processor 122), working with the cryptographic service element 123. In this case the token is of the new kind, still operating in accordance with ISO8583, relating to a PAN and referred to by (PUR, PAR), but now computed according to device type, security features, and aspects of the (b,w) pair. Tokenization permission is sent 1210 back to the destination processor 121 identifying the PAN and the linked (PUR, PAR) along with details necessary for FPE token generation for the payment device 91 having the PAN to be tokenized for the bank and wallet combination (b,w), with direction that tokenization is to be by the second approach. The destination processor 121 then uses the cryptographic service element 123 to compute 1212 the token using FPE. Specifically, the value ET = E2[spice,K](PAN) is computed using FPE, where the spice (may also be termed IV) is formed with Payment Token Profile parameters - typically, these relate to the device type and its security features - and the secret key K (kept in the cryptographic service element 123) corresponds to the IIN and BIN bank product associated with the (b,w) pair. From this, the Token Unique Reference (TUR) is generated, and the TUR and (computed) ET pair are provided 1214 to the destination processor 121. The destination processor 121 then performs 1216 certain administrative steps to establish the ET and TUR - firstly, the ET-PAN combination is liked to its TUR, and to (PUR, PAR). Secondly, certain attributes are set for ET to indicate that it is a decentralized token and how tokenization/detokenization is achieved - these are the following: A1, which indicates whether FPE encryption is used, and if so, of what type (values may be a pair of the type "YES", "Method 2"); and A2, which indicates whether and how transferred data associated with the ET is encrypted (values may be a pair of the type "YES", "AES-GSM-256"). Using these values - specifically TUR, (PUR,PAR), (ET-PAN), A1 and A2 - the destination processor 121 uses the cryptographic service element 123 to compute 1218 the encrypted reference TrCr, again using E1, but now with TrCr = E1 [(ET-PAN), (PUR,PAR),A1]. The values TUR, TrCr and A2 are all sent 1220 to the bank 98 to be backed up and earmarked for FPE-based token processing. The bank performs 1222 the following steps. First of all, it determines whether the information provided is encrypted (and how) using A2 - if so TrCr is decrypted accordingly. When this is done, the bank 98 is aware that token management can be (from the perspective of the bank 98) continue according to existing processes, simply with the addition of decentralized tokenization and detokenization using FPE. The bank 98 stores ET-PAN, (PUR,PAR), A1 and A2, and issues 1224 an enriched EMV certificate on the digital card's public key, including ET instead of the PAN, and authenticates A1 and A2. The EMV certificate is issued 1224 to the source processor 93 with which the wallet provider 92 originally interacted.

The payment device 91 can now be provisioned by the wallet provider 92, but fewer steps are required at this point. The origin processor 93 sends 1226 TUR, TrCr and A2 back to the wallet provider 92.

Different approaches are again available depending on whether the wallet provider stores the token itself, or provisions the payment device 91 with the token. If is the former, the token ET is added 1228 to a list of tokens for the TUR and (PUR, PAR) and backed up, and will be used when a transaction takes place. If the latter, then a personalization string is created 1230 encrypted for the payment device 91 (including ET and parameters A1 and A2). This is provided 1232 to the payment device 91, which acknowledges 1234 receipt of the token and readiness for use - back-up 1236 by the owner may now take place.

Figure 11 illustrates a pathway if neither source nor destination are migrated, whereas Figure 14 illustrates a pathway if the source is not migrated but the destination is migrated to calculation of a token. There are two other cases, but these do not require detailed discussion here, as the skilled person will appreciate how these can be implemented in the light of the embodiments described. Firstly, the source may be migrated, but the destination not migrated. This will be a rare case, in the context of a gradual migration to computed tokens, and may be avoided altogether - however it can be achieved with reference to the Figure 14 case by computing a token but retaining it in a token vault as shown in Figure 12. Secondly, both source and destination are migrated - in which case both domains simply compute the token and the migration process is straightforward.

More generally, the skilled person will appreciate that many modifications may be made to the embodiments described above within the spirit and scope of the claims.

**Claims**

1. A method of processing credentials in a distributed system comprising a plurality of credential processing nodes, wherein each of the plurality of credential processing nodes is adapted to perform credential processing in response to credential processing requests according to at least a first credential processing type or at least a second credential processing type, the method comprising:

   establishing that a credential processing request is to be directed to a new credential processing node for the associated credential;

determining whether stakeholders for the credential support the second credential processing type; determining whether the new credential processing node supports the second credential processing type; and if both the stakeholders for the credential and the new credential processing node support the second credential processing type, the new credential processing node processes the credential using the second credential processing type, otherwise the new credential processing node processes the credential using the first credential processing type.

2. The method of claim 1, wherein the first credential processing type comprises associating the credential with a value by reference to a stored table, and wherein the second credential processing type comprises generating the value from the credential by a predetermined process.

3. The method of claim 2, wherein the generation of the value from the credential uses a cryptographic process.

4. The method of claim 3, wherein the generation of the value from the credential is based on parameters associated with the owner of the credential.

5. The method of any of claims 2 to 4, wherein if an original processing node uses the first credential processing type for the credential and the new processing node uses the second credential processing type for the credential, a new credential is generated.

6. The method of any of claims 2 to 4, wherein if the new credential processing node uses the first credential processing type for the credential, the credential is migrated to the new credential processing node.

7. The method of any preceding claim, wherein the method of processing credentials comprises tokenisation and/or detokenization of a sensitive value.

8. The method of claim 7, wherein the first credential processing type comprises storage of the token and the associated sensitive value in a token vault for the credential processing node.

9. The method of claim 7 or claim 8, wherein the distributed system is a transaction processing system, and wherein the sensitive value is an account number for a cardholder.

10. The method of claim 9, wherein the stakeholders comprise an issuing bank for the cardholder.

11. The method of claim 10, wherein the token is for digital transactions, and the stakeholders comprise a wallet provider for the cardholder.

12. A distributed processing system adapted for the processing of credentials, wherein the distributed processing system comprises:

a plurality of credential processing nodes adapted to perform credential processing in response to credential processing requests according to at least a first credential processing type or at least a second credential processing type; and
means to route a credential processing request to a credential processing node for the associated credential; wherein if the means to route the credential processing request determines that the credential processing request should be routed to a new credential processing node, the distributed system is adapted to:

determine whether stakeholders for the credential support the second credential processing type; determine whether the new credential processing node supports the second credential processing type; and if both the stakeholders for the credential and the new credential processing node support the second credential processing type, provide that the new credential processing node processes the credential using the second credential processing type, otherwise provide that the new credential processing node processes the credential using the first credential processing type.

13. The distributed processing system of claim 12, wherein the first credential processing type comprises associating the credential with a value by reference to a stored table, and wherein the second credential processing type comprises generating the value from the credential by a predetermined process using a cryptographic process.

14. The distributed processing system of claim 12 or claim 13, wherein the distributed system is a transaction processing system, and wherein processing credentials comprises tokenisation and/or detokenization of an account number for a cardholder, wherein the credential is the token and the stakeholders comprise an issuing bank for the cardholder.

15. The distributed processing system of claim 14, wherein the token is for digital transactions, and the stakeholders comprise a wallet provider for the cardholder.

Figure 1

Figure 2

Figure 3

Figure 4

Figure 5

Figure 6

Figure 7

Tokenization
Parametrization Tables

81

80

indexOwnership

Token Ownership
Table

{Wallet Provider,
Token REquestor}

84

Storage = {Wallet App,
CVM App,
Payment app,
CVM environment}

82

indexSecurity

Security Score
Table

Interaction =
{Face-to-face
Remote,
contactless,
QR code}

Payment Technology =
{MCM, MCBP, MTBP,
Etc.}

83

indexExpiry

Expiry Date
Table

{monthExpiry,
yearExpiry}

Initial Vector at high cipher level (a), or
Tweak/Spice at lower block cipher level (b)

IV/Spice

random

## Figure 8

Token Cryptogram Type
(TCT)

{MCM1.0; MCM1.1; MCBP1.0; MCBP1.1;
MCBP2.0; MTBP}

RT1

Payment Token Profile

Token Storage Type
(TST)

{eSE; REE; TEE;CLOUD}

Consumer Token Profile

RT2

RT2

{RP; CL; MS; MST}

Payment Interfaces

Consumer Interfaces

{Management
Interface;WSP
interface}

RT3

Brands

{MC; DMC; MAS}

## Figure 9

Figure 10

Figure 11

Figure 12

EP 4 715 713 A1

**Figure 13A**

Transaction Data +
(randomly aloted) Token +
1 Cryptogram

1102

K(ATC, Token) → Transaction Cryptogram

Centralized Token Vault

Detokenize Token to PAN

1106

Verification OK  1104
(Transaction Data is valid and signed)

PAN

Aythorize (Transaction Data
1108  on PAN)

**Figure 13B**

Transaction Data +
(FPE computed) Token +
2 Cryptograms

1102

K(ATC, Token) → Transaction Cryptogram

De-centralized Token Vault as
Token-PAN mapping in each
device/serve

K[(b,w), security
device index, ...]

Verification OK  1104
(Transaction Data is valid and signed)

PAN = Decryption
(FPE) [Token]

1106a

PAN

Aythorize (Transaction Data
1108  on PAN)

91

92

93

94

121

98

Consumer Operator

Token Requestor/ Wallet Provider

TV00 Origin

TV10 Origin

PR02 Destination Processor ONLY NO TV

HSM/CaaS with FPE

PR12 Destination Processor ONLY NO TV

Bank

FPE Token demand for a new PAN of a bank b in a NEW device/server of a TR/WP w

**1200**

**1202** Tokenize (with FPE) a PAN in new device

**1204** Check:
0) First time PAN tokenized? Create PUR.
1) (b, w) in Geo Transfer List
2) Bank b accepts FPE tokens
3) TV00 Origin and its processor (with HSM/CaaS) are NOT FPE Ready
4) PR02 Destination and PR12 Destination are FPE ready
5) Redirect to PR02/PR12

**1206** Risk analysis for (PAN, PUR, Device type & security features, (b,w), FPE proposal)

**1208** Result after risk analysis: "Approve" new Token linked to account ISO8583-switched by PAN and referred to by (PUR, PAR) can be COMPUTED as a FPE Token when moved to new geography. (FPE = Field Preserving Encryption)

**1210** Re-route (see IDP ***) for PAN linked to (PUR,PAR) with FPE Token computation to the enabled processor PR02 (or its back-up PR12)

Tokenization permission (Approve/Decline)

Establish Payment Token Profile based on Device Type, Security Features, etc.

**1212** computeFPEToken

A) Compute: ET = E2[spice, K](PAN), with FPE where:
- IV/spice is formed with the Payment Token Profile parameters
- Secret key K (kept in HSM/CaaS) corresponding to the IIN & BIN bank product of the (b, w) pair.

**1214** TUR computed ET

B) Generate new Token Unique Reference (TUR)

**1216** C) Link ET-PAN to its to TUR, and (PUR, PAR): TUR, (PUR, PAR), (ET-PAN)
D) Set ET's attributes A1 and A2:
- A1: (FPE Encrypted, FPE Method) = (FPEe, FPEm) = "YES", "Method 2";
- A2: (Transfer Encrypted, Transfer Encrypt Method) = (Tre, Trm) = "YES", "AES-GCM-256"

TUR, (PUR, PAR), (ET-PAN), A1, A2

**1218** E) Encrypt: TrCr = E1[(ET-PAN), (PUR, PAR), A1] = E1[(E2[PAN]-PAN), (PUR, PAR), A1]

Back-up TUR, TrCr, A2; Ear mark it up for FPE Token processing

**1220** Send TUR, TrCr, A2

**1222** - If A2(Tre) = "YES" then decrypt TrCr as per A2(Trm), into: (ET-PAN), (PUR, PAR), A1. Keep all token management procedures as today.
- Store (ET-PAN, (PUR, PAR), A1, A2
- Issue enriched EMV Certificate on digital card's PK, which includes ET instead of PAN, and authenticate A1 and A2

**1224** Enriched EMV Certificate on digital card's PK, ET, A1, A2

**1226** Send TUR, TrCr, A2

**1228** - Decrypt TrCr as per A2, into: (ET-PAN), (PUR, PAR), A1
If server storage (e.g., Token Requestor case):
- Add ET to list of tokens for (PUR, PAR): (ET-PAN), (PUR, PAR),)A1
- Backup its : TUR, TrCr, A2, A1

**1230** Else (Wallet Provider case),
- Create personalization string encrypted for consumer's device including ET as per today, plus the new attributes A2, A1

**1232** Else (Wallet Provider case), personalize New Token (TUR, ET)

**1234** Acknowledge the new (Encrypted) Token is OK and ready to use

**1236** Token is ready to be backed up by the owner

Figure 14

Europäisches
Patentamt

European
Patent Office

Office européen
des brevets

# EUROPEAN SEARCH REPORT

**Application Number**

EP 24 20 1494

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/046338 A1 (LAXMINARAYANAN PRASANNA [US] ET AL) 12 February 2015 (2015-02-12) * paragraph [0024] - paragraph [0154]; figures 2, 4, 6-8 * | 1-15 | INV. G06Q20/32 G06Q20/38 |
| X | EP 3 748 525 B1 (MASTERCARD INTERNATIONAL INC [US]) 15 February 2023 (2023-02-15) * paragraphs [0023] - [0094]; figures 16-23 * | 1-15 | |
| A | US 2016/380998 A1 (DAVIS MARK H [US] ET AL) 29 December 2016 (2016-12-29) * paragraph [0009] - paragraph [0056]; figures 1-6 * | 1-15 | |

TECHNICAL FIELDS
SEARCHED    (IPC)

G06Q

The present search report has been drawn up for all claims

| Place of search | Date of completion of the search | Examiner |
|---|---|---|
| The Hague | 21 February 2025 | Guenov, Mihail |

EPO FORM 1503 03.82 (P04C01)

## ANNEX TO THE EUROPEAN SEARCH REPORT
## ON EUROPEAN PATENT APPLICATION NO.

EP 24 20 1494

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2025

| Patent document cited in search report | | | Publication date | Patent family member(s) | | Publication date |
|---|---|---|---|---|---|---|
| US 2015046338 | A1 | | 12-02-2015 | US | 2015046338 A1 | 12-02-2015 |
| | | | | US | 2020034837 A1 | 30-01-2020 |
| | | | | US | 2023267455 A1 | 24-08-2023 |
| EP 3748525 | B1 | | 15-02-2023 | EP | 3748525 A1 | 09-12-2020 |
| | | | | EP | 4184365 A1 | 24-05-2023 |
| US 2016380998 | A1 | | 29-12-2016 | US | 2016019396 A1 | 21-01-2016 |
| | | | | US | 2016380998 A1 | 29-12-2016 |
| | | | | WO | 2016014152 A1 | 28-01-2016 |

EPO FORM P0459

For more details about this annex : see Official Journal of the European Patent Office, No. 12/82

**REFERENCES CITED IN THE DESCRIPTION**

**Patent documents cited in the description**

- EP 23195827

- EP 23195829